Europäisches Patentamt

European Patent Office

Office européen des brevets

(19)

(11) Numéro de publication: **0 187 886**
**B1**

# (12) FASCICULE DE BREVET EUROPEEN

(45) Date de publication du fascicule du brevet:
**20.04.88**

(51) Int. Cl.⁴: **B 65 B 3/32**

(21) Numéro de dépôt: **85100490.3**

(22) Date de dépôt: **18.01.85**

(54) Doseur volumétrique automatique de produits à viscosités diverses.

(43) Date de publication de la demande:
**23.07.86 Bulletin 86/30**

(45) Mention de la délivrance du brevet:
**20.04.88 Bulletin 88/16**

(84) Etats contractants désignés:
**AT BE CH DE GB IT LI**

(56) Documents cités:
**FR - A - 2 556 317**
**GB - A - 599 773**
**US - A - 2 854 170**
**US - A - 3 101 161**
**US - A - 3 218 994**

(73) Titulaire: **Tastet, Claude, Ilot des Bordes,**
**F-64940 Moumour (FR)**

(72) Inventeur: **Tastet, Claude, Ilot des Bordes,**
**F-64940 Moumour (FR)**

(74) Mandataire: **Schlawick, Yvan, 8, rue Théophile Gautier,**
**F-65000 Tarbes (FR)**

ACTORUM AG

## Description

La machine objet de l'invention concerne les doseurs voluméques de produits à viscosités diverses, utilisés plus particulièrement dans l'undustrie alimentaire.

Il existe des machines de dosage pour fourrer des articles de confiserie et pâtisserie, comportant un système mobile piston-chemise permettant de réaliser des doses. Cependant, l'entraînement de la chemise est réalisé indépendamment de celui du piston, ce qui nécessite deux vérins augmentant considérablement le coût de construction. D'autre part, certaines machines ont la partie mobile piston-chemise actionnée par un bras articulé associé à une came, cette conception présente de nombreux points sensibles à l'usure, donc risques de casse, de plus, elle est très encombrant.

On connaît les brevets suivants:

GIUSTI Tito et al, brevet GB-A-599 773.

Décrit un appareil qui comporte un réservoir positionné sur un corps cylindrique, dans lequel glisse une seule pièce longitudinale qui, simultanément, pousse le produit et ferme l'ouverture.

VALENTYNE P.H., brevet US-A-3 218 994.

Présente un réservoir fixé sur un corps cylindrique, dans lequel se déplacent un piston et une chemise actionnés respectivement par un vérin indépendant; la longueur de la chemise est supérieure à la longueur du corps cylindrique.

BORGARDT Henry et al, brevet US-A-2 854 170.

Comporte une chemise glissant dans le corps cylindrique pour obturer le trou du réservoir supérieur, laquelle chemise est actionnée par un bras articulé. Le produit est poussé par un piston, lequel est également manoeuvré par un deuxième bras articulé.

On connaît aussi un doseur volumétrique correspondant au préambule de la revendication 1 (brevet US-A-3 101 161-IVARSON N.S.M.) comportant un corps cylindrique et creux surmonté d'un réservoir vertical communiquant par un trou, lequel corps constitue intérieurement une chambre et porte à une extrémité un bec verseur et l'autre extrémité est fermée par un bouchon traversé par un arbre, et le corps proche du buchon est traversé par un conduit pour amener l'air comprimé derrière un grand piston, lequel bouchon est monté par sa périphérie à l'extrémité arrière du corps et possède un épaulement intérieur traversé par un trou central pour le passage de l'arbre, lequel arbre porte à l'intérieur du corps: un grand piston, une entretoise munie d'un épaulement, et un petit piston logé dans une chemise cylindrique; lequel petit piston est retenu sur l'extrémité intérieure de l'arbre et l'arbre porte à son extrémité arrière une butée circulaire, le corps se prolonge par un cône qui renferme un clapet et porte à son extrémité un bec verseur prolongé par un tube caoutchouc.

La machine objet de la présente invention permet d'obvier à ces inconvénients. L'invention, telle qu'elle est caractérisée dans les revendications, résout le problème consistant à créer une machine pour doser automatiquement des portions de produits à viscosités diverses, en ce que le piston et la chemise sont actionnés par les mêmes éléments, réduisant son côut de construction et son encombrement.

La machine objet de la demande comporte un circlips qui est comprimé autour de l'épaulement 11 de l'entretoise 10 par la paroi intérieure de la chambre 3, lequel circlips 12 est constitué en un matériau extensible permettant son extension diamètrale au niveau d'une gorge circulaire 21 libérant le passage de l'entretoise 10, laquelle gorge est constituée dans la paroi de la chambre 3 proche de l'ouverture 4 du réservoir 1 communiquant avec le corp 2. En ce que la chemise 14 cylindrique a à son extrémité arrière un retour intérieur 13 qui se trouve entre le circlips 12 et le petit piston 15, en ce qu'un ressort à boudin 17 est placé au-delà du bouchon 5 autour de la partie extérieure de l'arbre 8, lequel ressort à boudin est réglé au moyen d'un fourreau 20 qui se visse par son côté intérieur sur la butée circulaire 28.

Une autre particularité réside en ce que le cône positionné à l'avant du corps est percé d'orifices et est doublé intérieurement d'une membrane en caoutchouc qui se dilate vers le centre lors du retrait des éléments mobiles, pour compenser la dépression, de manière à empêcher la remontée du produit se trouvant plus avant dans le tube caoutchouté.

Une autre caractéristique réside en ce que le tube caoutchouc 32 porte à son extrémité un cône répartiteur constitué de plusieurs grilles assemblées au moyen d'un profil en U.

Les dessins annexés aux présentes illustrent à titre d'exemple non limitatif un mode de réalisation de la machine, conjointement avec la description ci-après.

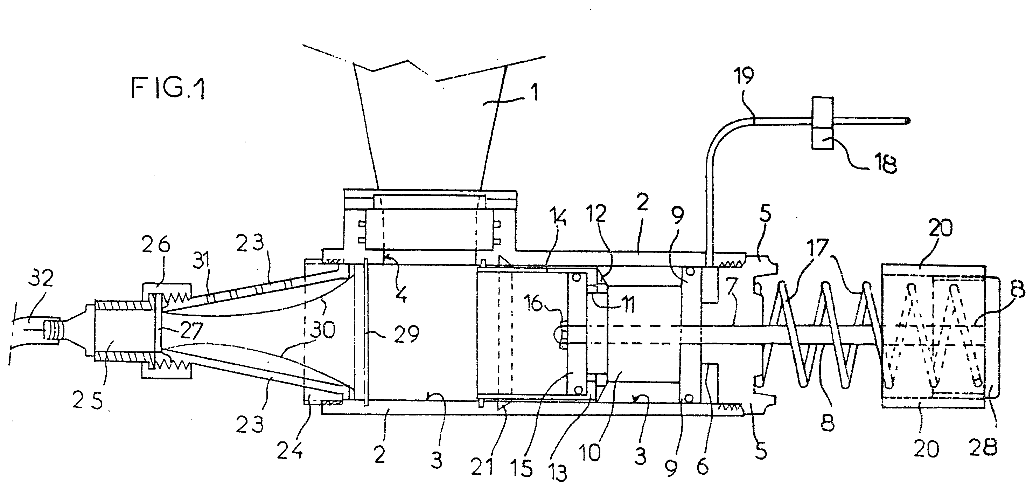

La figure 1 représente une coupe longitudinale de la machine, en élévation, avec les éléments doseurs au repos.

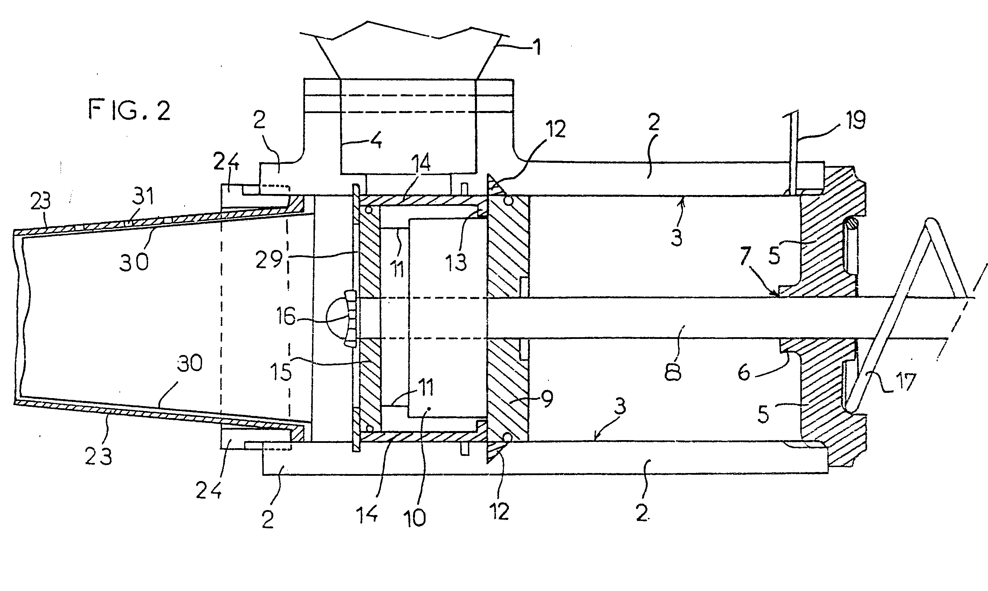

La figure 2 représente partiellement une coupe longitudinale de la machine, en élévation, avec les éléments doseurs avancés.

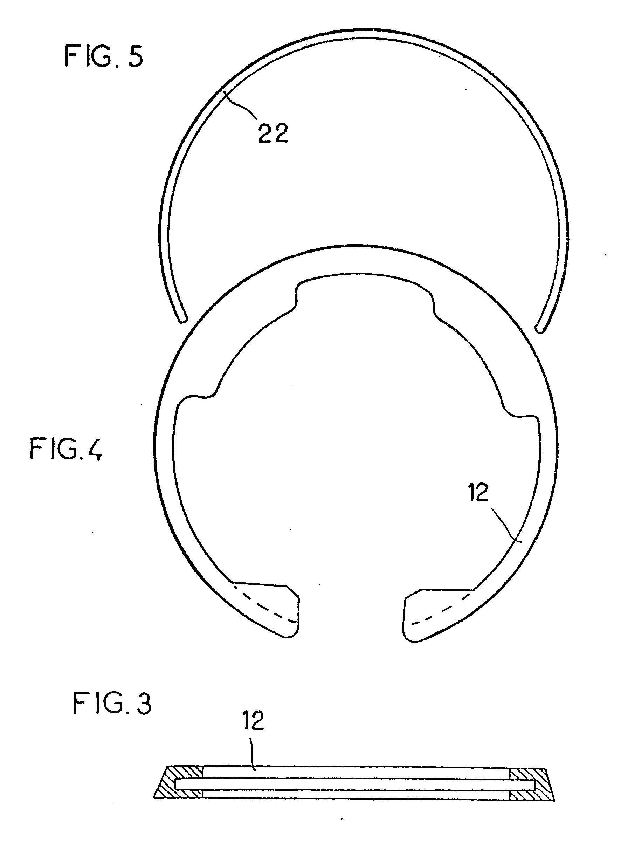

La figure 3 représente un circlips en coupe verticale, transversale, pour les réalisations prévues, suivant le module d'élasticité du matériau employé.

La figure 4 représente le circlips en vue de profil, dans le cas où un appareillage complémentaire est nécessaire.

La figure 5 représente une spire ressort du circlips, dans le cas où le matériau utilisé n'a pas un module d'élasticité suffisante.

La figure 6 représente à une autre échelle, une coupe vereticale d'un cône répartiteur, en élévation.

La figure 7 représente en élévation, à une autre échelle, un moyen de préhension pour retirer le réservoir supérieur du corps longitudinal.

Tel que représenté par l'ensemble des figures, un réservoir 1 tronconique est fixé par son plus petit diamètre sur un corps 2 horizontal et creux de la machine, lequel réservoir 1 communique avec une chambre 3 longitudinale par une ouverture 4 largement prévue pour une descente convenable du produit. A l'extrémité arrière du corps 2, en considérant que l'axe du réservoir 1 délimite l'avant de l'arrière corps 2, est vissé un bouchon 5 par sa périphérie, lequel bouchon 5 possédant un épaulement 6 comporte un trou central 7 pour le passage d'un arbre 8 qui porte plus avant dans la chambre 3 un grand piston 9 juxtaposé à une entretoise 10 possédant un épaulement 11, autour duquel épaulement 11 est positionné un circlips 12 en compression qui bute contre le retour intérieur 13 de l'extrémité arrière d'une chemise 14 cylindrique, dans laquelle chemise 14 glisse un petit piston 15 maintenu sur l'arbre 8 par une vis 16. L'autre extrémité de la chemise 14 arrive à hauteur de l'ouverture 4 du réservoir 1.

Lorsque l'air comprimé commandé par une pédale 18 est amené par un conduit 19 dans la chambre formée par la largeur de l'épaulement 6 du bouchon 5, le grand piston 9 glisse sur la paroi intérieure de la chambre 3 poussant tous les éléments positionnés sur l'arbre 8, en outre ce dernier qui se continue vers l'arrière au-delà du bouchon 5 traverse un ressort à boudin 17 et porte à son extrémité arrière un fourreau 20 muni d'une butée 38.

Le fourreau 20 se visse par l'intérieur sur la périphérie de la butée 28 permettant ainsi de régler la longueur de course de l'arbre 8. Quand le grand piston 9 pousse les éléments mobiles positionnés devant lui, le circlips 12 en état comprimé bute sur le retour intérieur 13 de la chemise 14, laquelle est projetée vers l'avant, jusqu'à l'instant, où ledit circlips 12 trouve une gorge 21 circulaire constituée dans la paroi de la chambre 3, laquelle gorge 21 permet l'extension diamétrale du circlips 12 sous l'impulsion de sa spire ressort 22, cessant ainsi de projeter vers l'avant la chemise 14 qu'il a amené en fin de course, laquelle chemise 14 bute sur un joint 29 circulaire. Par son extension le circlips 12 s'efface et libère l'entretoise 10 permettant au grand piston 9 de continuer sa course et d'expulser la dose isolée dans la chemise 14 par le truchement du petit piston 15 vers un cône 23 fixé à l'avant du corps 2 par l'entremise d'une bague de serrage 24. L'extrémité du cône 23 porte un bec verseur 25 par l'intermédiaire d'une bague 26 de serrage, et, à la jonction est placé intérieurement un clapet 27 circulaire de non retour par tous moyens appropriés. Après le relâchement de la pédale 18, le ressort à boudin 17 en état comprimé reprend sa forme initiale par une extension en arrière, chassant l'ait par la même conduit 19 d'amenée, lequel ressort 17 provoque le recul du fourreau 20 ainsi que de l'arbre 8 qui a son extrémité arrière fixée sur la butée 28. La vis 16 de l'extrémité avant de l'arbre 8 maintient le petit piston 15 qui ramène la chemise cylindrique 14 par son retour intérieur 13, lequel retour intérieur 13 sort le circlips 12 de son logement pour le comprimer contre la paroi intérieure de la chambre 3 autour de l'épaulement 11. Une membrane 30 en latex épouse la forme intérieure du cône 23 qui possède des trous 31 permettant le resserrement vers le centre, par pression atmosphérique, ladite membrane 30 pour compenser la dépression momentanée due au retour en arrière des éléments mobiles pour libérer l'ouverture 4.

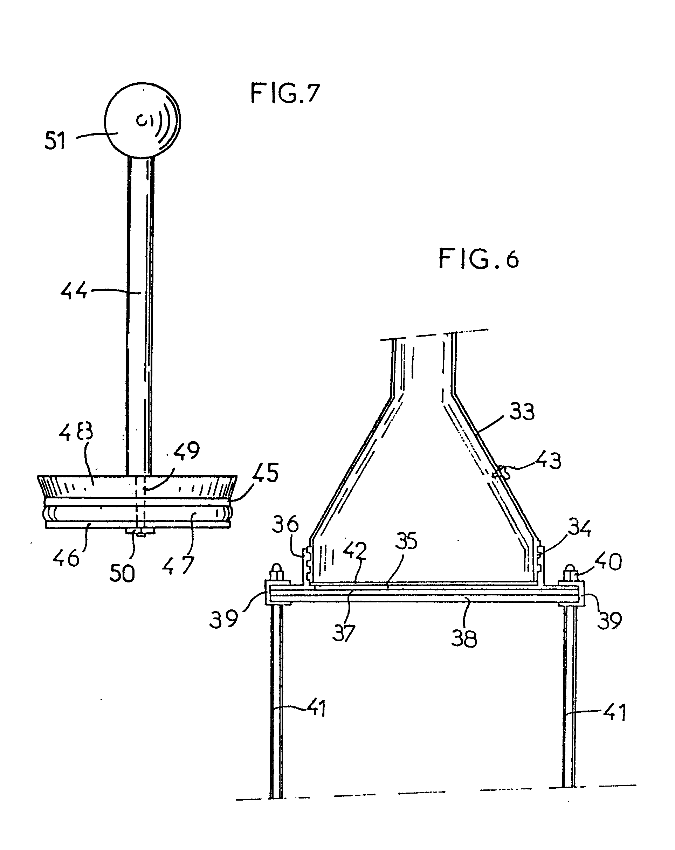

Pour travailler à distance du doseur proprement dit, le bec verseur 25 est prolongé par un conduit caoutchouté 32 qui porte à son extrémité un cône répartiteur, représenté en figure 6, lequel est constitué d'une cône 33 possédant en sa partie la plus évasée un pas de vis 34, sur lequel se visse une grille 35 par le truchement d'un tube 36 positionné perpendiculairement sur elle; à laquelle grille 35 sont juxtaposées par dessous deux autres grilles 37 et 38 pour régler l'obturation des trous de la première grille 35. Les grilles 37 et 38 sont maintenues avec la grille 35 par l'intermédiaire d'une pièce 39 ayant une section en forme de U, laquelle pièce entoure les trois grilles sur trois côtés, permettant par le quatrième côté le changement ou retrait ultérieur des grilles 37 ou 38. Une fois positionné dans la pièce 39, l'ensemble des grilles est immobilisé par trois vis 40, sur trois côtés, par l'entremise de tiges 41, lesquelles sont fixées par leur partie inférieure sur tout support approprié, non représenté. Un cache 42 pouvant être glissé au-dessus de la grille 35 pour réduire la surface de chute du produit. Le cône 33 est muni d'un purgeur 43.

En fin de journée, le réservoir peut être ôté pour servir de récipient au produit restant, pour ce faire une tige 44 comporte à une extrémité deux plaques 45 et 46 circulaires (voir fig. 6), entre lesquelles est positionné un joint d'étanchéité 47.

La tige 44 visse, par le truchement des plaques 45 et 46, sur le pourtour du fond du réservoir 1, lequel vissage est limité par la forme évasée 48 de la plaque supérieure 45. Les plaques 45 et 46 ainsi que le joint 47 sont enfilés sur une tige 49 qui prolonge la tige 44 par tout moyen approprié, et les éléments 45, 46 et 47 sont immobilisés sur ladite tige 49 par un écrou 50. A l'extrémité supérieure de la tige 44 est vissé un corps sphérique 51 pour une bonne prise de main. La machine objet de l'invention est plus particulièrement destinée à la pâtisserie artisanale, mais peut être utilisée pour d'autres emplois similaires.

**Revendications**

1. Machine pour doser automatiquement des produits à viscosités diverses, comportant un corps (2) cylindrique et creux surmonté d'un réservoir (1) vertical, lequel corps (2) constituant intérieurement une chambre (3) communiquant avec le réservoir (1) par un trou (4) et portant à une extrémité un bec verseur (25), l'autre extrémité étant fermée par un bouchon (5) traversé par un arbre (8), et le corps (2) étant traversé, près du bouchon, par un conduit (19) pour amener de l'air comprimé derrière un grand piston (9), lequel bouchon est monté par sa périphérie et possède un épaulement intérieur (6) traversé par un trou central (7) pour le passage de l'arbre (8), lequel arbre porte à l'intérieur du corps (2): ledit grand piston (9), une entretoise (10) munie d'un épaulement (11), et un petit piston (15) logé dans une chemise (14) cylindrique; lequel petit piston (15) est retenu sur l'extrémité de l'arbre (8) intérieure à la chambre, lequel arbre porte à son extrémité arrière extérieure à la chambre une butée circulaire (28); le corps (2) se prolonge du côté opposé au bouchon par un cône (23) qui renferme un clapet (27) et porte à son extrémité le bec verseur (25) prolongé par un tube caoutchouc (32), caractérisé en ce qu'un circlips (12) est comprimé autour de l'épaulement (11) de l'entretoise (10) par la paroi intérieure de la chambre (3), lequel circlips (12) étant constitué en un matériau extensible permettant son extension diamétrale au niveau d'une gorge circulaire (21) pour libérer le passage de l'entretoise (10), laquelle gorge étant formée dans la paroi de la chambre (3) près de l'ouverture (4) du réservoir (1) communiquant avec le corps (2), en ce que la chemise (14) cylindrique à son extrémité arrière un retour radial intérieur (13) qui se trouve entre le circlips (12) et le petit piston (15), en ce qu'un ressort à boudin (17) est placé au-delà du bouchon (5) autour de la partie extérieure de l'arbre (8), lequel ressort à boudin voit sa course réglée au moyen d'un fourreau (20) qui se visse par son côté intérieur sur la butée circulaire (28).

2. Machine selon la revendication 1, caractérisée en ce que le circlips (12) renferme une spire ressort (22) pour aider sa propre extension diamétrale dans la gorge circulaire (21) réalisée à son profil.

3. Machine selon la revendication 1, caractérisé en ce que le retour radial intérieur (13) de la chemise (14) a un diamètre d'ouverture plus grand que celui de l'entretoise (10).

4. Machine selon les revendications 1 et 3, caractérisée en ce que le retour radial intérieur (13) de la chemise (14) a un diamètre d'ouverture plus petit que le diamètre du petit piston (15).

5. Machine selon la revendication 1, caractérisée en ce que le cône (23) comporte des trous (31) pour compenser volumétriquement l'aspiration réalisée par le retour du petit piston (15).

6. Machine selon la revendication 5, caractérisée en ce que le cône (23) est doublé intérieurement d'une membrane élastique (30) se dilatant vers le centre pour compenser la dépression momentanée.

7. Machine selon la revendication 1, caractérisée en ce que le tube caoutchouc (32) porte à son extrémité un cône répartiteur comportant deux petites grilles (37) et (38) juxtaposées à une autre grille (35) de réglage au moyen d'un profil en U.

## Patentansprüche

1. Maschine zum selbsttätigen Zumessen von Produkten mit unterschiedlichen Viskositäten, mit einem zylindrischen, hohlen Körper (2), an dem ein vertikales Reservoir (1) angeordnet ist, welcher Körper (2) innen eine Kammer (3) hat, die mit dem Reservoir (1) über ein Loch (4) kommuniziert und an einem Ende einen Ausguss (25) aufweist, während das andere Ende mittels eines von einer Stange (8) durchsetzen Stopfens (5) verschlossen ist, und nahe dem Stopfen von einer Leitung (19) zum Speisen von Druckluft hinter einen grossen Kolben (9) durchsetzt ist, wobei der Stopfen an seinem Umfang gehalten ist und einen inneren, von einem zentralen Loch (7) zum Durchlassen der Stange (8) durchsetzten Ansatz (6) aufweist und die Stange im Inneren des Körpers (2) die folgenden Teile trägt: den grossen Kolben (9), eine mit einem Kragen (11) versehene Versteifung (10) und einen kleinen Kolben (15), der in einem zylindrischen Hemd (14) untergebracht und am in der Kammer gelegenen Ende der Stange (8) befestigt ist, welche an ihren hinteren, ausserhalb der Kammer gelegenen Ende einen runden Anschlag (28) trägt, und wobei der Körper (2) auf der zum Stopfen entgegengesetzten Seite durch einen Konus (23) verlängert ist, welcher durch ein Klappenventil (27) absperrbar ist und an seinem äussersten Ende den durch ein Kautschukrohr (32) verlängerten Ausguss (25) trägt, dadurch gekennzeichnet, dass ein Sicherungsring (12) um den Kragen (11) der Versteifung (10) mittels der Innenwand der Kammer (3) angedrückt gehalten ist, wobei dieser Sicherungsring (12) aus einem dehnbaren Werkstoff besteht, der auf der Höhe einer Ringnut (21) in Durchmesserrichtung aufweitbar ist, um den Durchlauf der Versteifung (10) freizugeben, wobei die Ringnut in der Wand der Kammer (3) nahe der mit dem Körper (2) kommunizierenden Öffnung (4) des Reservoirs (1) angeordnet ist, dass das zylindrische Hemd (14) an seinem hinteren Ende einen radial nach innen ragenden Bund (13) zwischen dem Sicherungsring (12) und dem kleinen Kolben (15) aufweist, dass eine Schraubenfeder (17) jenseits des Stopfens (5) um den äusseren Teil der Stange (8) herum angeordnet ist, und dass der Hub dieser Schraubenfeder mittels einer Hülse (20) regulierbar ist, welche mit ihrer Innenseite mit der runden Anschlag (28) verschraubt ist.

2. Maschine nach Anspruch 1, dadurch gekennzeichnet, dass der Sicherungsring (12) eine Federklammer (22) zum Unterstützen seiner Aufweitung in Durchmesserrichtung in die Ringnut (21) hinein einschliesst, wobei diese Ringnut zur Aufnahme des Profils des Sicherungsringes gestaltet ist.

3. Maschine nach Anspruch 1, dadurch gekennzeichnet, dass der Bund (13) des Hemdes (14) einen Öffnungsdurchmesser hat, welcher grösser als der Durchmesser der Versteifung (10) ist.

4. Maschine nach den Ansprüchen 1 und 3, dadurch gekennzeichnet, dass der Bund (13) des Hemdes (14) einen Öffnungsdurchmesser hat, der kleiner als der Durchmesser des kleinen Kolbens (15) ist.

5. Maschine nach Anspruch 1, dadurch gekennzeichnet, dass der Konus (23) mit Löchern versehen ist, um das durch den Rückstoss des kleinen Kolbens (15) verursachte Luftvolumen auszugleichen.

6. Maschine nach Anspruch 5, dadurch gekennzeichnet, dass der Konus (23) innen mit einer elastischen Membran (30) ausgekleidet ist, die sich zur Mitte hin verlagern kann, um den momentanen Druckabfall auszugleichen.

7. Maschine nach Anspruch 1, dadurch gekennzeichnet, dass das Kautschukrohr (32) an seinem äusseren Ende einen verteilerkonus mit zwei kleinen Gittern (37, 38) trägt, welche neben einem weiteren Gitter (35) zur Regulierung mittels eines U-Profils angeordnet sind.

## Claims

1. A machine for automatically dosing materials of various viscosities, comprising a hollow cylinder (2) with a vertical hopper (1) on top, which cylinder (2) forms an inner housing (3) in communicatrion with the hopper (1) through an opening (4), said housing having a discharge mouth (25) at one end, the other end being closed by a cap (5) with an opening for the passage of a rod (8); and an intake channel goes through said cylinder (2) near the cap and brings compressed air behind a large piston (9), and said cap is mounted peripherally and has an inside shoulder (6) with a central opening (7) running through it for the passage of the rod (8), which rod bears, inside the housing: the said large piston (9), a spacer (10) fitted with a shoulder (11) and a small piston (15) housed in a cylinder (14); which small piston (15) is held at the end of the rod (8) inside the housing, said rod (8) carrying a circular stop (28) at its rear end, outside the housing; the cylinder (2) is extended at the end opposite the cap by a cone (23) enclosing a valve (27) and bearing at its end the discharge mouth (25) with a rubber tube extension (32); and the machine is characterized by a circlip 12 comopressed against the soulder (11) of the spacer (10) by the inner wall of the housing (3), which circlip (12) is made of a resilient material allowing it to extend diametrically into a circular groove (21) to free a passage for the spacer (10), which groove is provided in the wall of the housing (3) near the opening (4) of the hopper (1) in communication with the cylinder (2); the machine being further characterized by the cylinder (14) having at its rear end a radially extending inward angle (13) located between the circlip (12) and the small piston (15) and further characterized by a coil spring (17) being placed beyond the cap (5) around the outer portion of the rod (8), the stroke of the said coil spring being adjusted by means of a sleeve (20) the inside of which is screwed on to the circular stop (28).

2. A machine according to claim 1, characterized by the circlip (12) having a spring coil (22) to assist its own diametrical extension into the circular groove (21), said spring coil being designed to fit the profile of the circlip (12).

3. A machine according to claim 1, characterized by the radially extending inward angle (13) of the cylinder (14) having an opening the diameter of which is larger than that of the spacer (10).

4. A machine according to claims 1 and 3, characterized by the radially extending inward angle (13) of the cylinder (14) having an opening the diameter of which is smaller than that of the small piston (15).

5. A machine according to claim 1, characterized by the cone (23) being provided with holes (31) to compensate for the aspiration caused by the return of the small piston (15).

6. A machine according to claim 5, characterized by the cone (23) being lined on its inner surface by a resilient membrane (30) which expands towards the centre to compensate for the temporary depression.

7. A machine according to claim 1, characterized by the rubber tube (32) carrying at its end a distribution cone comprising two grates (37) and (38) juxtaposed to another adjusting grate (35) by means of a channel bar.

FIG.1

0 187 886

FIG. 2

0 187 886

FIG. 5

22

FIG.4

12

FIG. 3

12

FIG.7

FIG.6

51

44

48

49

45

46

50

47

36

42

35

33

43

34

39

37

38

40

39

41

41